# EUROPEAN PATENT SPECIFICATION

(11) **EP 3 138 406 B1**
(45) Date of publication and mention of the grant of the patent: **15.04.2020**
(21) Application number: 16183674.7
(22) Date of filing: 11.08.2016
(51) Int. Cl.: A21D 10/00, G01G 19/00, G01N 33/10

(54) **DISPENSING DEVICE**
SPENDERVORRICHTUNG
DISPOSITIF DE DISTRIBUTION

(30) Priority: 02.09.2015 IT UB20153359
(43) Date of publication of application: 08.03.2017
(73) Proprietor: ORIPAN S.r.l., 38079 Tione di Trento (Trento) (IT)
(72) Inventor: FRANCHINI, Francesco, I-38079 Tione di Trento (Trento) (IT)
(74) Representative: Frontoni, Stefano

(56) References cited:
- FR-A1- 2 796 146
- US-A- 5 724 882
- US-A1- 2002 137 216
- US-A1- 2005 186 317
- WESLEY I J ET AL: "NON-INVASIVE MONITORING OF DOUGH MIXING BY NEAR INFRARED SPECTROSCOPY", JOURNAL OF CEREAL SCIENCE, ACADEMIC PRESS LTD, GB, vol. 27, 1 January 1998 (1998-01-01), pages 61-69, XP002936982, ISSN: 0733-5210, DOI: 10.1006/JCRS.1997.0151
- OSBORNE B G ET AL: "APPLICATION OF NEAR INFRARED REFLECTANCE SPECTROSCOPY TO THE COMPOSITIONAL ANALYSIS OF BISCUITS AND BISCUIT DOUGHS", JOURNAL OF THE SCIENCE OF FOOD AND AGRICULTURE, WILEY & SONS, CHICHESTER, GB, vol. 35, 1 January 1984 (1984-01-01), pages 99-105, XP000877228, ISSN: 0022-5142

## Description

The present invention relates to a device for dispensing ingredients for the preparation of a food mixture. In particular, of interest herein is the sector of processes for preparing doughs for foodstuffs, such as pizza, pasta, cakes, bread, etc. With reference to the dispensing step, in many of the known processes, including automatic ones, it is envisaged that for one or more ingredients dispensing is performed manually by an operator. In automatic processes, this may regard above all ingredients present in the dough in low or minimal percentages, such as sugar, leavening agents, salt, etc., whereas in semiautomatic processes like the ones carried out in craft bakeries this may regard even all the ingredients of the dough. US5724882 describes a device according to the preamble of Claim 1. US20050186317A1 describes prior art that may be of some interest as technical background.

In such a context, the object of the present invention is to make available a dispensing device that will be able to provide an aid to the operator who carries out dispensing of the ingredient or ingredients manually, in particular that will be prearranged for enabling dispensing of the ingredients only after a check has been carried out on the effective correspondence of the ingredient loaded into the device with what is envisaged by the process.

The object referred to is achieved by a device presenting the characteristics specified in Claim 1.

The ensuing claims form an integral part of the technical teaching provided herein in relation to the invention.

Further characteristics and advantages of the invention will emerge clearly from the ensuing description with reference to the annexed drawings, which are provided purely by way of non-limiting example and in which:
- Figures 1 and 2 are schematic illustrations of an embodiment of the device described herein in two different operating conditions;
- Figures 3A and 3B represent an embodiment of an actuation system provided in the device of Figure 1, in two different operating conditions; and
- Figure 4 is a schematic illustration of a further embodiment of the device described herein.

In the ensuing description, various specific details are illustrated, aimed at providing an in-depth understanding of the embodiments. The embodiments may be obtained without one or more of the specific details, or with other methods, components, or materials, etc. In other cases, known structures, materials, or operations are not illustrated or described in detail so that various aspects of the embodiment will not be obscured.

The references used herein are provided merely for convenience and hence do not define the sphere of protection or the scope of the embodiments.

As mentioned above, the device described herein is a device for dispensing ingredients for the preparation of food mixtures, in particular doughs, such as doughs for bread, pizza, pasta, cakes, etc.

As will be discussed in greater detail in what follows, the device described herein may present different configurations according to the specific applications for which it is to be used.

In general, the dispensing device described herein is characterized in that it is prearranged so as to subject the step of dispensing of the ingredient to a preliminary check on the type of ingredient that has been loaded into the device, enabling dispensing of the dough only in the case where the ingredient loaded corresponds to what is envisaged by the process.

In general, the device described herein comprises:
- an optical sensor designed to detect an optical parameter of the ingredient; and
- a control unit configured for generating a signal for enabling dispensing of the ingredient on the basis of a signal coming from the sensor.

The enabling signal in question may even just be a signal of a visual or acoustic type that informs the operator whether the ingredient analysed is or is not the one envisaged by the process.

In various embodiments, the device further comprises:
- a structure for loading the ingredient; and
- control means for controlling the flow of the ingredient from the loading structure to a structure for receiving the ingredient.

The control unit may be configured for governing the aforesaid means for controlling the flow of the ingredient, in an action tending to determine the aforesaid flow, via the above enabling signal. In this case, the enabling signal is hence a signal for governing the control means.

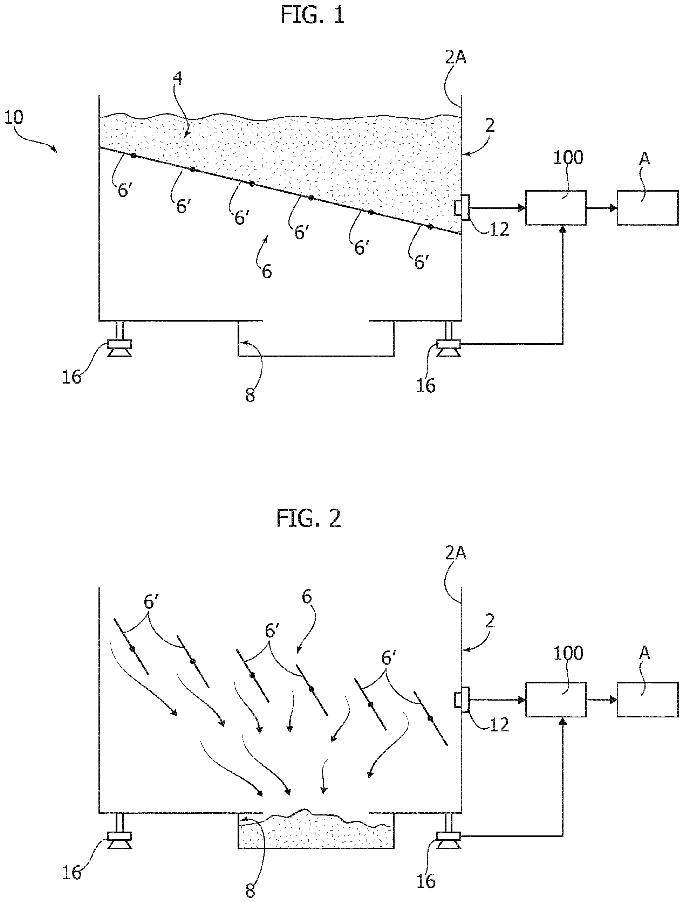

Figure 1 illustrates an embodiment of the device described herein, which is particularly suited to being used in the context of a semiautomatic process, performed in a craft-type bakery, for preparing a dough for foodstuffs.

In various embodiments, as in the one illustrated in Figure q, the device - designated by the reference number 10 - comprises a frame 2 shaped like a container, which defines the loading structure of the device. The frame 2 identifies at the top a chamber 4, accessible through the top opening 2A of the frame, within which the operator pours the ingredient to be dispensed. The chamber 4 is delimited at the bottom by a valve unit 6, which represents the aforesaid means for controlling the flow of the ingredient.

In various embodiments, as in the one illustrated, the valve unit 6 comprises a series of blades 6' rotatably mounted on the frame 2 and governed via an appropriate actuation system between two end angular positions: a first position in which the blades 6' are each in contact with the respective adjacent blades (or, for the two blades at the end of the series, with the individual adjacent blade and one of the walls of the frame 2), at their longitudinal edges, and as a whole define a barrier designed to prevent passage of the ingredient contained in the chamber 4 into the bottom part of the frame 2; and a second position in which, with respect to the first position, the blades are inclined upwards and are no longer in contact with one another so as to define, between the various pairs of adjacent blades, a series of respective passages through which the ingredient can drop by gravity into the underlying part of the frame 2.

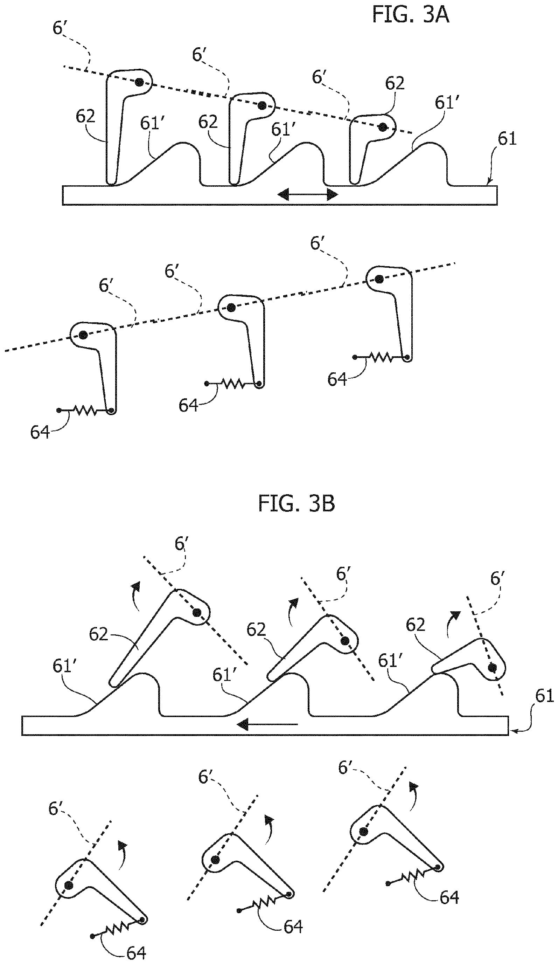

The system designed to operate the blades between the two positions indicated may be of different types, taking also into account the overall dimensions and the costs envisaged for the device in the individual applications. In various preferred embodiments, this system envisages a mechanism governed by an actuator for turning the blades from the closing position mentioned above to the opening position - the actuator and the motor being represented schematically by the block A in Figures 1 and 2 - and a system of elastic means for bringing the blades back from the opening position to the closing position. In various embodiments, as in the one illustrated (see Figures 3A and 3B), the mechanism referred to envisages a rod 61 that is linearly mobile, according to a reciprocating motion, provided on which is a series of cam surfaces 61' that engage a corresponding series of arms 62 fixed in rotation with respect to the blades. As a result of this mutual engagement between the cam surfaces referred to and the corresponding arms, the movement of translation of the rod is converted into a movement of rotation of the arms. Once again in this type of embodiment, elastic elements 64 are provided that act on the above arms or on further arms, which are also connected to the blades to bring the latter back into the closing position.

The device 10 further comprises a structure 8 for collecting the ingredient that is set underneath the loading structure 2 and is in communication with the bottom part thereof so as to receive the ingredient that passes though the valve unit 6. In the embodiment illustrated, this collecting structure is schematically represented in the form of a drawer.

The optical sensor referred to above and designated by the reference number 12, which is designed to detect an optical parameter of the ingredient, is set on the frame 2 so as to face the inside of the chamber 4, into which the ingredient to be dispensed is poured.

The control unit 100 of the device is configured for governing the actuation system of the blades on the basis of the signal received by the sensor, in particular for sending the blades into the opening position only in the case where the ingredient collected in the chamber 4 is recognised, via said sensor, as being the ingredient envisaged by the process. It should in general be noted that, in this type of control, the unit may be configured also to take into account a possible given order with which the process envisages dispensing of the various ingredients and hence be configured for enabling dispensing of the ingredient if and only if this, in addition to corresponding to one of the ingredients envisaged, is also dispensed at the right moment.

For the purposes referred to above, the control unit is programmable in such a way that, for each ingredient to be dispensed, loaded therein are one or more values or ranges of values of the aforesaid parameter detected by the sensor, which are characteristic of the particular ingredient. In operation, the control unit is hence configured for comparing one or more signals obtained from the detection performed by the sensor with the values or ranges of values associated to the ingredient envisaged, and for sending the blades into the opening position whenever a correspondence of the former with the latter is detected.

In various preferred embodiments, the sensor is constituted by a colorimeter designed to provide an indication of the colour of the ingredient by determining the wavelengths of the light reflected thereby. In this case, the reference values loaded into the control unit for each ingredient are indicative of characteristic values or ranges of wavelengths.

Moreover, in various embodiments, as in the one illustrated, the device 10 may also comprise a system for weighing the amount of material introduced into the chamber 4. Preferably, the system is constituted by a series of load cells 16 arranged at the bases of the frame 2. In various preferred embodiments, in addition to the control described above on the type of ingredient, the control unit is configured for subjecting control of the blades also to detection, by the aforesaid weighing means, of the amount of material introduced into the chamber.

The device just described constitutes an extremely versatile independent unit, which can be used in a wide range of applications, in particular both in the context of processes of preparation of dough carried out in bakeries and in the context of automatic processes of an industrial type.

The device described herein may in any case also envisage configurations of another type. In particular, in alternative embodiments, the device may present a configuration that enables integration thereof directly with the line for supply of the ingredients of an industrial plant.

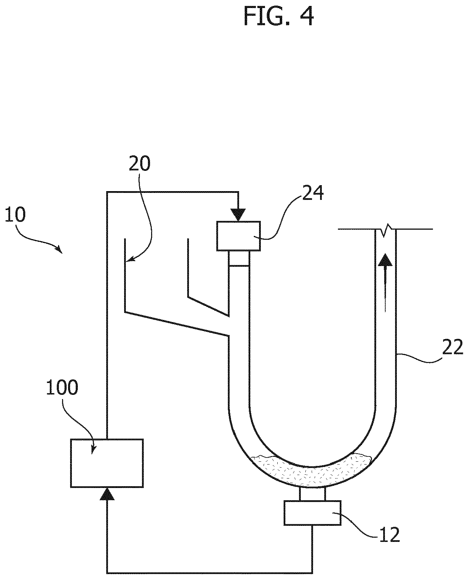

In this regard, in various embodiments, as in the one illustrated (see Figure 4, where the elements in common with those of the previous embodiment are designated by the same reference numbers), the device 10 may hence comprise a conduit 22 for supplying the ingredient, which is designed to be connected directly to the supply line of the industrial plant. Pneumatic means 24, for example a pump driven by an electric motor, are associated to the conduit, for supplying the ingredient, along the conduit, up to the supply line of the industrial plant. The structure 20 for loading the ingredients communicates with the conduit in such a way that the ingredient poured therein reaches this directly by gravity. In various embodiments, as in the one illustrated, the conduit has a U-shaped portion in which the ingredient poured by the operator into the loading structure accumulates, and set in a position corresponding to this portion is the optical sensor 12 of the device, designed to carry out detection on the ingredient. It should be noted that, in this case, the means for controlling the flow of the ingredient mentioned above are represented by pneumatic means. These are in fact governed by the control unit 100, precisely for generating the flow of supply of the ingredient to the line of the plant only if the control unit verifies, by way of the sensor, that the ingredient contained in the conduit effectively corresponds to the one envisaged in the process. The modalities with which this check is made are evidently the same as those already described above with reference to the previous embodiment, and the control unit is hence configured accordingly, in the same way as already seen above.

Of course, without prejudice to the principle of the invention, the details of construction and the embodiments may vary, even significantly, with respect to what is illustrated herein purely by way of non-limiting example, without thereby departing from the scope of the invention, as is defined in the annexed claims.

## Claims

1. A device for dispensing an ingredient during the preparation of a mixture for making a food product, said device comprising:
- a structure for loading the ingredient (2, 22) ;
- control means (6, 24) for controlling the flow of the ingredient from said loading structure (2, 22) to a structure for receiving the ingredient (8),
- an optical sensor (12) designed to detect an optical parameter of said ingredient; and
- a control unit (100) configured for generating a signal for enabling dispensing of the ingredient on the basis of a signal coming from said sensor (12), and for governing said control means via said enabling signal; wherein
- said optical sensor (12) is designed to detect an optical parameter of said ingredient in said loading structure (2, 22);
- said control unit (100) is configured for governing said control means in the action of determining said flow of the ingredient from said loading structure (2, 22) to said receiving structure (8) only in the case where said ingredient is recognised by said unit as a predetermined ingredient, on the basis of the detection made by said sensor.

2. The device according to Claim 1, wherein said sensor is a colorimeter or a spectrometer.

3. The device according to any one of the preceding claims, wherein in said unit (100) there are recorded for each ingredient to be dispensed one or more reference values or ranges of reference values of said parameter detected by said sensor, and said control unit is configured for comparing one or more signals obtained via said sensor with said reference values or ranges of reference values, and for governing said control means in the action of determining said flow of the ingredient whenever a given relation of correspondence between said signals and said reference values is detected.

4. The device according to any one of the preceding claims, wherein said control means are constituted by a valve unit (6).

5. The device according to Claim 4, wherein said valve unit is constituted by a valve with rotatable blades (6').

6. The device according to any one of Claims 1 to 3, wherein said control means are constituted by a pump (24) governed by an electric motor.

7. The device according to Claim 1, comprising a system (16) for weighing the amount of ingredient contained in said loading structure (2), wherein said control unit is configured for generating said enabling signal also on the basis of a signal coming from said weighing system.

8. A method for dispensing an ingredient during the preparation of a mixture for making a food product, using a dispensing device comprising:
- an optical sensor (12) designed to detect an optical parameter of said ingredient;
- a structure for loading the ingredient (2, 22);
- control means (6, 24) for controlling the flow of the ingredient from said loading structure (2, 22) to a structure for receiving the ingredient (8); and
- a control unit (100) configured for generating a signal for enabling dispensing of the ingredient on the basis of a signal coming from said sensor (12), and for governing said control means via said enabling signal;
said method envisaging the steps of:
- detecting via said sensor an optical parameter of said ingredient in said loading structure (2, 22); and- generating a signal for enabling dispensing of the ingredient and governing via said signal said control means in the action of determining said flow of the ingredient from said loading structure (2, 22) to said receiving structure (8), only in the case where said ingredient is recognised by said unit as a predetermined ingredient, on the basis of the detection made by said sensor.

9. The method according to Claim 8, comprising the step of detecting the colour of said ingredient and of governing said control means in the action of determining said flow of the ingredient in the case where the colour detected corresponds to a reference colour recorded in said control unit.

## Patentansprüche

1. Einrichtung zum Abgeben einer Zutat während der Zubereitung einer Mischung zum Herstellen eines Lebensmittelprodukts, wobei die Einrichtung Folgendes umfasst:
- eine Struktur (2, 22) zum Laden der Zutat,
- Steuermittel (6, 24) zum Steuern des Flusses der Zutat aus der Ladestruktur (2, 22) in eine Struktur (8) zum Aufnehmen der Zutat,
- einen optischen Sensor (12), der dafür ausgelegt ist, einen optischen Parameter der Zutat zu erfassen, und
- eine Steuereinheit (100), die zum Erzeugen eines Signals zum Aktivieren einer Abgabe der Zutat auf Grundlage eines von dem Sensor (12) kommenden Signals und zum Regeln der Steuermittel über das Aktivierungssignal konfiguriert ist,
wobei
- der optische Sensor (12) dafür ausgelegt ist, einen optischen Parameter der Zutat in der Ladestruktur (2, 22) zu erfassen,
- die Steuereinheit (100) dafür konfiguriert ist, die Steuermittel beim Bestimmen des Flusses der Zutat aus der Ladestruktur (2, 22) in die Aufnahmestruktur (8) nur dann zu regeln, wenn die Zutat von der Einheit auf Grundlage der durch den Sensor vorgenommenen Erfassung als eine vorab bestimmte Zutat erkannt wird.

2. Einrichtung nach Anspruch 1, wobei es sich bei dem Sensor um ein Kolorimeter oder ein Spektrometer handelt.

3. Einrichtung nach einem der vorhergehenden Ansprüche, wobei in der Einheit (100) für jede abzugebende Zutat ein oder mehrere Referenzwerte oder Referenzwertbereiche des durch den Sensor erfassten Parameters hinterlegt sind und die Steuereinheit dafür konfiguriert ist, ein oder mehrere über den Sensor erhaltene Signale mit den Referenzwerten oder Referenzwertbereichen zu vergleichen und die Steuermittel beim Bestimmen des Flusses der Zutat zu regeln, wenn eine gegebene Korrespondenzbeziehung zwischen den Signalen und den Referenzwerten erfasst wird.

4. Einrichtung nach einem der vorhergehenden Ansprüche, wobei die Steuermittel durch eine Ventileinheit (6) gebildet sind.

5. Einrichtung nach Anspruch 4, wobei die Ventileinheit durch ein Ventil mit drehbaren Flügeln (6') gebildet ist.

6. Einrichtung nach einem der Ansprüche 1 bis 3, wobei die Steuermittel durch eine von einem Elektromotor geregelte Pumpe (24) gebildet sind.

7. Einrichtung nach Anspruch 1, umfassend ein System (16) zum Wiegen der in der Ladestruktur (2) enthaltenen Menge der Zutat, wobei die Steuereinheit dafür konfiguriert ist, das Aktivierungssignal auch auf Grundlage eines von dem Wiegesystem kommenden Signals zu erzeugen.

8. Verfahren zum Abgeben einer Zutat während der Zubereitung einer Mischung zum Herstellen eines Lebensmittelprodukts mittels einer Abgabeeinrichtung, die Folgendes umfasst:
- einen optischen Sensor (12), der dafür ausgelegt ist, einen optischen Parameter der Zutat zu erfassen,
- eine Struktur (2, 22) zum Laden der Zutat,
- Steuermittel (6, 24) zum Steuern des Flusses der Zutat aus der Ladestruktur (2, 22) in eine Struktur zum Aufnehmen der Zutat (8) und
- eine Steuereinheit (100), die zum Erzeugen eines Signals zum Aktivieren einer Abgabe der Zutat auf Grundlage eines von dem Sensor (12) kommenden Signals und zum Regeln der Steuermittel über das Aktivierungssignal konfiguriert ist,
wobei das Verfahren die folgenden Schritte vorsieht:
- Erfassen eines optischen Parameters der Zutat in der Ladestruktur (2, 22) über den Sensor und
- Erzeugen eines Signals zum Aktivieren einer Abgabe der Zutat und Regeln der Steuermittel beim Bestimmen des Flusses der Zutat von der Ladestruktur (2, 22) in die Aufnahmestruktur (8) über das Signal nur dann, wenn die Zutat von der Einheit auf Grundlage der durch den Sensor vorgenommenen Erfassung als eine vorab bestimmte Zutat erkannt wird.

9. Verfahren nach Anspruch 8, umfassend den Schritt des Erfassens der Farbe der Zutat und des Regelns der Steuermittel beim Bestimmen des Flusses der Zutat, wenn die erfasste Farbe einer in der Steuereinheit hinterlegten Referenzfarbe entspricht.

## Revendications

1. Dispositif de distribution d'un ingrédient pendant la préparation d'un mélange pour préparer un produit alimentaire, ledit dispositif comprenant :
- une structure pour charger l'ingrédient (2, 22) ;
- des moyens de commande (6, 24) pour commander le flux de l'ingrédient depuis ladite structure de chargement (2, 22) jusqu'à une structure pour recevoir l'ingrédient (8),
- un capteur optique (12) conçu pour détecter un paramètre optique dudit ingrédient ; et
- une unité de commande (100) configurée pour générer un signal pour activer une distribution de l'ingrédient sur la base d'un signal provenant dudit capteur (12), et pour régir lesdits moyens de commande par ledit signal d'activation ;
dans lequel
- ledit capteur optique (12) est conçu pour détecter un paramètre optique dudit ingrédient dans ladite structure de chargement (2, 22) ;
- ladite unité de commande (100) est configurée pour régir lesdits moyens de commande lors de l'action de détermination dudit flux de l'ingrédient depuis ladite structure de chargement (2, 22) jusqu'à ladite structure de réception (8) seulement dans le cas où ledit ingrédient est reconnu par ladite unité comme un ingrédient prédéterminé, sur la base de la détection effectuée par ledit capteur.

2. Dispositif selon la revendication 1, dans lequel ledit capteur est un colorimètre ou un spectromètre.

3. Dispositif selon l'une quelconque des revendications précédentes, dans lequel, dans ladite unité (100), est/sont enregistrée(s), pour chaque ingrédient à distribuer, une ou plusieurs valeur(s) de référence ou plage(s) de valeurs de référence dudit paramètre détecté par ledit capteur, et ladite unité de commande est configurée pour comparer un signal ou plusieurs signaux obtenu(s), par l'intermédiaire dudit capteur, avec lesdites valeurs de référence ou plages de valeurs de référence, et pour régir lesdits moyens de commande lors de l'action de détermination dudit flux de l'ingrédient chaque fois qu'une relation de correspondance donnée entre lesdits signaux et lesdites valeurs de référence est détectée.

4. Dispositif selon l'une quelconque des revendications précédentes, dans lequel lesdits moyens de commande sont constitués par une unité de vanne (6).

5. Dispositif selon la revendication 4, dans lequel ladite unité de vanne est constituée par une vanne à lames rotatives (6').

6. Dispositif selon l'une quelconque des revendications 1 à 3, dans lequel lesdits moyens de commande sont constitués par une pompe (24) régie par un moteur électrique.

7. Dispositif selon la revendication 1, comprenant un système (16) pour peser la quantité d'ingrédient contenu dans ladite structure de chargement (2), dans lequel ladite unité de commande est configurée pour générer ledit signal d'activation également sur la base d'un signal provenant dudit système de pesage.

8. Procédé de distribution d'un ingrédient pendant la préparation d'un mélange pour préparer un produit alimentaire, en utilisant un dispositif de distribution comprenant :
- un capteur optique (12) conçu pour détecter un paramètre optique dudit ingrédient ;
- une structure pour charger l'ingrédient (2, 22) ;
- des moyens de commande (6, 24) pour commander le flux de l'ingrédient depuis ladite structure de chargement (2, 22) jusqu'à une structure pour recevoir l'ingrédient (8) ; et
- une unité de commande (100) configurée pour générer un signal pour activer la distribution de l'ingrédient sur la base d'un signal provenant dudit capteur (12), et pour régir lesdits moyens de commande par ledit signal d'activation ;
ledit procédé envisageant les étapes consistant :
- à détecter, par l'intermédiaire dudit capteur, un paramètre optique dudit ingrédient dans ladite structure de chargement (2, 22) ; et
- à générer un signal pour activer la distribution de l'ingrédient et régir, par ledit signal, lesdits moyens de commande lors de l'action de détermination dudit flux de l'ingrédient depuis ladite structure de chargement (2, 22) jusqu'à ladite structure de réception (8), seulement dans le cas où ledit ingrédient est reconnu par ladite unité comme un ingrédient prédéterminé, sur la base de la détection effectuée par ledit capteur.

9. Procédé selon la revendication 8, comprenant l'étape consistant à détecter la couleur dudit ingrédient et à régir lesdits moyens de commande lors de l'action de détermination dudit flux de l'ingrédient dans le cas où la couleur détectée correspond à une couleur de référence enregistrée dans ladite unité de commande.
